# EUROPEAN PATENT APPLICATION

(11) **EP 4 738 575 A1**
(43) Date of publication of application: **06.05.2026**
(21) Application number: 24862968.5
(22) Date of filing: 17.06.2024
(51) Int. Cl.: H01M 50/244, H01M 50/251, B65D 88/02, B65D 90/00

(54) **CONTAINER MODULE**

(30) Priority: 07.09.2023 KR 20230119310; 14.12.2023 KR 20230182382; 14.03.2024 KR 20240035929
(71) Applicant: LG Energy Solution, Ltd., Seoul 07335 (KR)
(72) Inventor: SON, Min-Soo, Daejeon 34122 (KR); KANG, Min-Seok, Daejeon 34122 (KR); YU, Sang-Hyun, Daejeon 34122 (KR); LEE, Jeong-Won, Daejeon 34122 (KR); JO, Sang-Hyun, Daejeon 34122 (KR)
(74) Representative: BCKIP Part mbB
(86) International application number: PCT/KR2024/008335
(87) International publication number: WO 2025/053385

(57) **Abstract**

A container module is disclosed. The container module according to an embodiment of the present disclosure includes a case configured to provide an internal space; a column located inside the case and extended in a top-bottom direction; a bracket including a vertical portion coupled to the column and a horizontal portion extended from the vertical portion; a battery pack located on the horizontal portion; and a support located below the bracket, and configured to support a lower surface of the horizontal portion.

## Description

### TECHNICAL FIELD

The present disclosure relates to a container module.

The present application claims priority to Korean Patent Application No. 10-2023-0119310 filed on September 7, 2023, Korean Patent Application No. 10-2023-0182382 filed on December 14, 2023 and Korean Patent Application No. 10-2024-0035929 filed on March 14, 2024 in the Republic of Korea, the disclosures of which are incorporated herein by reference.

### BACKGROUND

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Recently, with the emerging issues such as a lack of power or eco-friendly energy, Energy Storage Systems (ESS) used to store power for later use are gaining more attention. For example, one of proposed methods for controlling power supply is smart grid systems. The power usage is not constant and can change at any time. Typically, the power usage sharply increases in the summer daytime due to the use of cooling devices and sharply decreases in the nighttime. From the perspective of power consumption, power consumption is not constant and may frequently change, but from the perspective of power supply, the amount of power produced can be controlled to some extent, but in reality, it is difficult to meet the amount of power required. Accordingly, power oversupply or power shortage may occur due to the inequality in power supply and power consumption, and to solve this problem, the smart grid systems may flexibly store and control power. The concept of smart grid systems is that power is stored in times or regions in which surplus power occurs and the stored power is supplied in times and regions in which power shortage occurs. One of the essential elements for building the smart grid systems may be energy storage systems for storing power. More recently, with the widespread use of electric vehicles, energy storage systems may be used in facilities for charging the electric vehicles, for example, charging stations.

The energy storage system may include a plurality of battery containers. The number of battery containers and their placement may vary depending on different environments and requirements. To meet the requirements, there is a growing need for a battery container made up of a combination of small modules to improve energy density. Additionally, there is a growing need for a battery container that is easy to install and assembly to improve assembly efficiency and change to many different shapes and forms.

### SUMMARY

### Technical Problem

An object of the present disclosure is to solve these and other problems.

Another object of the present disclosure is to provide a container module with improved assembly efficiency.

Still another object of the present disclosure is to provide a container module of simple structure.

Yet another object of the present disclosure is to provide a container module of smaller size.

Further still another object of the present disclosure is to provide a container module that is easy to install a battery pack.

### Technical Solution

To achieve the above-described objects, a container module according to an embodiment of the present disclosure includes a case configured to provide an internal space; a column located inside the case and extended in a top-bottom direction; a bracket including a vertical portion coupled to the column and a horizontal portion extended from the vertical portion; a battery pack located on the horizontal portion; and a support located below the bracket, and configured to support a lower surface of the horizontal portion.

Additionally, the horizontal portion may include a first part extended from the vertical portion; and a second part extended from the first part, and coming into contact with the battery pack, and the support may support the second part.

Additionally, the support may include a horizontal support portion configured to support the lower surface of the horizontal portion; and a vertical support portion coupled to the column.

Additionally, the support may further include a truss part obliquely connecting the horizontal support portion to the vertical support portion.

Additionally, the support may further include a connection portion connecting the horizontal support portion to the vertical support portion in a curved way.

Additionally, the vertical support portion may be extended in the top-bottom direction, the horizontal support portion may be extended toward the column, and the vertical support portion and the horizontal support portion may be connected to form a corner.

Additionally, the horizontal support portion and the horizontal portion may be coupled by welding.

Additionally, the container module may further include a fastening member configured to fasten the vertical support portion to the column.

Additionally, the column may have a stopper hole, and the vertical portion may include a hook which is inserted into the stopper hole.

Additionally, at least one of the bracket, the support or the battery pack may be extended in a front-rear direction.

Additionally, the bracket may be extended in a front-rear direction, the bracket may further include a stopper at a rear end, and the battery pack may contact the stopper.

Additionally, the bracket may have a slide hole in the horizontal portion.

Additionally, the slide holes may include a plurality of slide holes, and the plurality of slide holes may be arranged along a length direction of the bracket.

A container system according to an aspect of the present disclosure includes the container module of the present disclosure.

An energy storage system according to an aspect of the present disclosure includes the container module of the present disclosure.

### Advantageous Effects

According to at least one of the embodiments of the present disclosure, it may be possible to improve energy density of the container module.

According to at least one of the embodiments of the present disclosure, it may be possible to simplify the structure of the container module.

According to at least one of the embodiments of the present disclosure, it may be possible to reduce the size of the container module.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a diagram showing a container module of the present disclosure.
FIG. 2 is a diagram showing an open front panel of the container module of FIG. 1.
FIG. 3 is a diagram showing the container module of FIG. 2, from which a battery pack is removed.
FIG. 4 is a diagram showing a bracket of a container module according to an embodiment of the present disclosure.
FIG. 5 is an exploded view showing some components of the bracket of FIG. 4.
FIG. 6 is an enlarged view showing a front part of the bracket of FIG. 4.
FIG. 7 is an enlarged view showing an intermediate part of the bracket of FIG. 4.
FIG. 8 is an enlarged view showing a rear part of FIG. 4.
FIG. 9 is a diagram showing the bracket of FIG. 4 when viewed from bottom.
FIG. 10 is a diagram showing the bracket of FIG. 4 when viewed from a different direction.
FIG. 11 is a cross-sectional view of FIG. 4, taken along the line A-A'.
FIG. 12 is an enlarged view of section B in FIG. 4.
FIG. 13 is a diagram showing the bracket of FIG. 4 installed at a column.
FIG. 14 is a diagram showing a pair of brackets of FIG. 4.
FIG. 15 is a diagram showing a battery pack installed at the bracket of FIG. 14.
FIG. 16 is a diagram showing a rear part of FIG. 15.
FIG. 17 is a diagram showing a variation of the bracket of FIG. 4.
FIG. 18 is a cross-sectional view of FIG. 3, taken along the line C-C'.
FIG. 19 is a diagram showing a variation of FIG. 18.
FIG. 20 is a diagram showing a variation of FIG. 18.
FIG. 21 is a diagram showing a variation of FIG. 18.
FIG. 22 is a diagram showing a variation of FIG. 18.
FIG. 23 is a diagram showing a variation of FIG. 18.
FIG. 24 is a diagram showing a variation of FIG. 18.
FIG. 25 is a diagram showing a variation of FIG. 18.
FIG. 26 is a diagram showing a container system of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure but not intended to be limiting, and thus it should be understood that a variety of other equivalents and modifications could have been made at the time the application was filed.

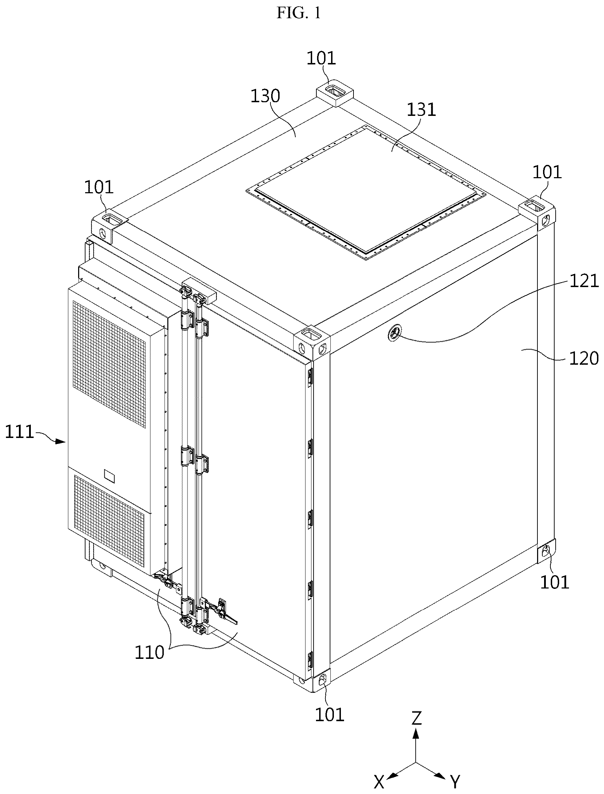

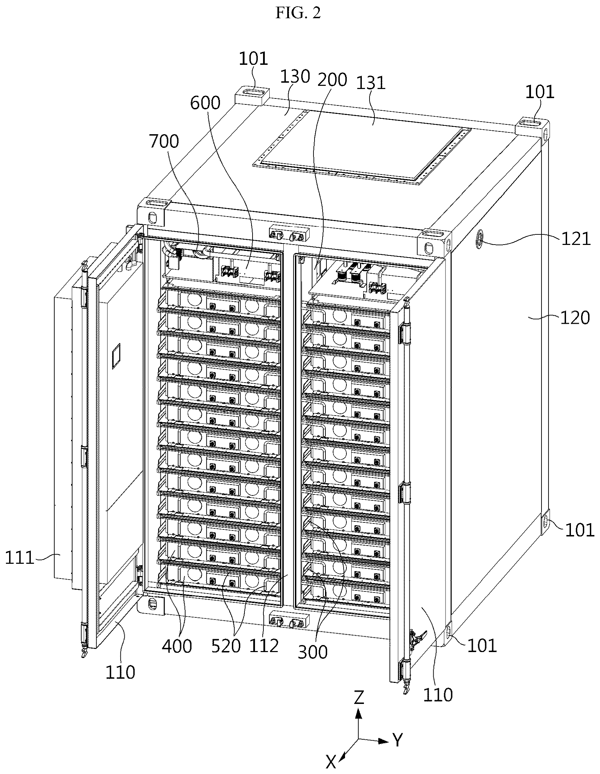

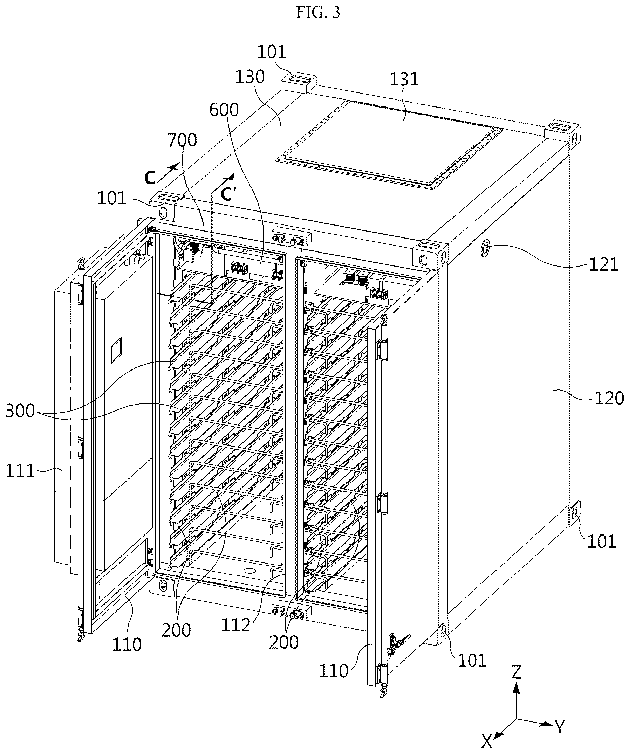

FIG. 1 is a diagram showing a container module of the present disclosure. FIG. 2 is a diagram showing an open front panel 110 of the container module of FIG. 1. FIG. 3 is a diagram showing the container module of FIG. 2, from which a battery pack 400 is removed.

Referring to FIGs. 1 to 3, the container module according to an embodiment of the present disclosure may include a case 100, a column 200 and the battery pack 400.

The case 100 may provide an internal space. The case 100 may include a plurality of parts. The case 100 may include a front panel 110, a pair of side panels 120, a top panel 130 and a bottom panel 140. The case 100 may have a rectangular parallelepiped shape. The case 100 may form the exterior of the container module.

The column 200 may be extended in the top-bottom direction or Z axis direction. The column 200 may be fixed, fastened or coupled to the inside of the case 100. Additionally, the upper and lower ends of the column 200 may be fixed, fastened or coupled to the inside of the case 100.

The column 200 may include a plurality of columns. The plurality of columns 200 may be arranged along the front-rear direction or X axis direction. Additionally, the plurality of columns 200 may be arranged along the left-right direction or Y axis direction. The plurality of columns 200 may be arranged at a regular interval. Some of the plurality of columns 200 may be arranged along the left side panel 120. Additionally, some of the plurality of columns 200 may be arranged along the right side panel 120. Additionally, some of the plurality of columns 200 may be located at the central area between the pair of side panels 120.

A bracket 300 may be coupled, fastened or fixed to the column 200. The bracket 300 may be extended along the front-rear direction or X axis direction. The bracket 300 may include a plurality of brackets. The plurality of brackets 300 may be arranged along the top-bottom direction or Z axis direction. Each bracket 300 may be fastened, fixed or coupled to the plurality of columns 200 arranged along the front-rear direction or Y axis direction. The bracket 300 may include a horizontal portion 310 and a vertical portion 320.

The plurality of brackets 300 may be coupled, fastened or fixed to the right side of the plurality of columns 200 arranged along the left side panel 120. Additionally, the plurality of brackets 300 may be coupled, fastened or fixed to the left side of the plurality of columns 200 arranged along the right side panel 120. Additionally, the plurality of brackets 300 may be coupled, fastened or fixed to each of the left side and the right side of the plurality of columns 200 arranged along the central area. The plurality of columns 200 and the plurality of brackets 300 may define a space in which the battery pack 400 will be mounted. The plurality of brackets 300 may support or fix the battery pack 400.

The battery pack 400 may be located on the horizontal portion 310. The battery pack 400 may include a plurality of battery packs. The plurality of battery packs 400 may be arranged along the top-bottom direction or Z axis direction to form a battery array. Additionally, the container module may include two battery arrays. The two battery arrays may be arranged along the left-right direction or Y axis direction. The battery array may be used to refer collectively to the plurality of battery packs 400. The plurality of battery packs 400 that forms the battery array may be spaced apart from each other.

The left battery array may be located between the columns 200 arranged along the left side panel 120 and the columns 200 arranged at the central area. The right battery array may be located between the columns 200 arranged along the right side panel 120 and the columns 200 arranged at the central area.

Each battery pack 400 may be mounted, coupled, fastened or fixed to a pair of brackets 300. The battery array may be located between the plurality of columns 200. A control unit 600 and a sensor unit 700 may be located on the battery array. The column 200 or the bracket 300 may support the battery pack 400 or the battery array.

By this configuration of the present disclosure, the battery pack 400 may be installed at the column 200 and the bracket 300 fixed to the inside of the case 100. Accordingly, the container module may not have a rack frame for mounting the battery pack 400. Because the container module does not have a rack frame, internal space utilization of the case 100 may be enhanced. Accordingly, energy capacity and energy density of the container module may increase.

Referring to FIGs. 1 to 3, the front panel 110 may be configured to be open or closed. The front panel 110 may include a pair of panels. The pair of front panels 110 may include a hinge. The pair of front panels 110 may rotate to close the case 100.

A front column 112 may support the pair of front panels 110. The front column 112 may be extended in the top-bottom direction. Additionally, the upper and lower ends of the front column 112 may be fixed, fastened or coupled to the base 100. When the pair of front panels 110 are in the closed state, the front column 112 may contact or support the pair of front panels 110.

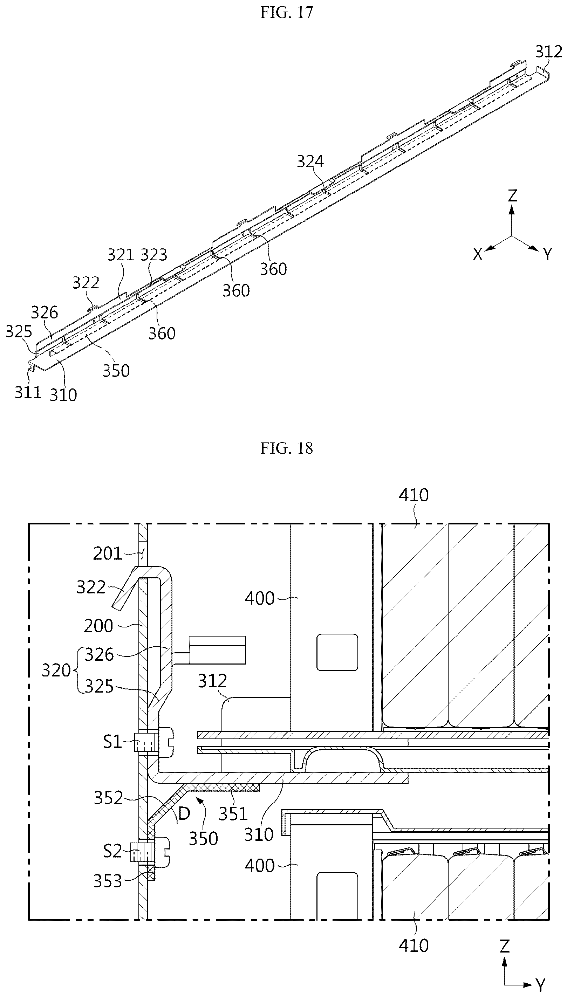

The battery pack 400 may be located inside the case 100. The battery pack 400 may include a plurality of battery cells 410 (see FIGs. 18 to 21). In this instance, the battery cell 410 may refer to a secondary battery. The battery pack 400 may include a plurality of battery packs. The plurality of battery packs 400 may be located inside the case 100. The battery pack 400 may have a rectangular parallelepiped shape.

The front panel 110 may include a cooling portion 111. For example, the cooling portion 111 may be a heat exchanger such as heating, ventilation & air conditioning (HVAC), a chiller, a cooler, etc. The cooling portion 111 may adjust the temperature of a cooling fluid flowing in the case 100. The cooling portion 111 may supply or circulate the cooling liquid or cooling gas into the case 100 through a pipe.

Referring to FIGs. 1 to 3, the container module of the present disclosure may include a venting portion 131. The top panel 130 may include the venting portion 131. The venting portion 131 may bring the inside and outside of the case 100 into communication with each other when a thermal event occurs. When the thermal event occurs, gases may be vented from the battery pack 400, and the pressure in the case 100 may rise. In this instance, the venting portion 131 may force the venting gases out of the case 100. Accordingly, the pressure in the case 100 may be lowered.

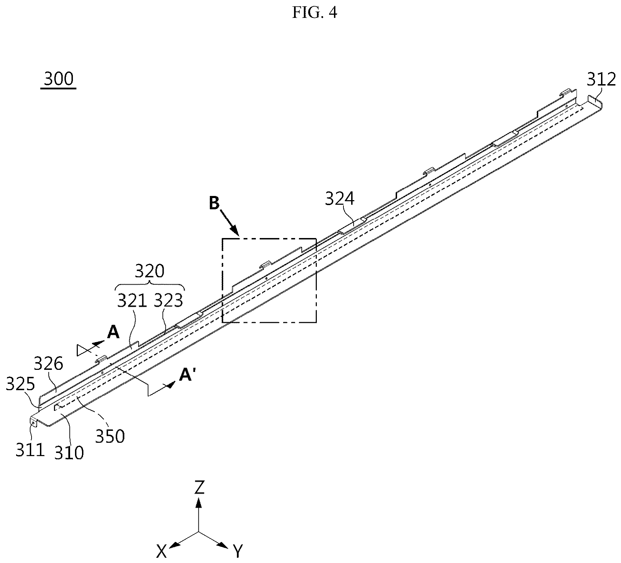

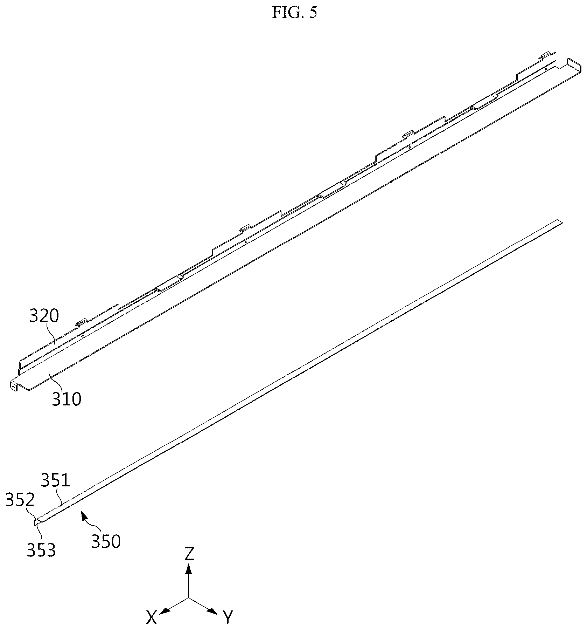

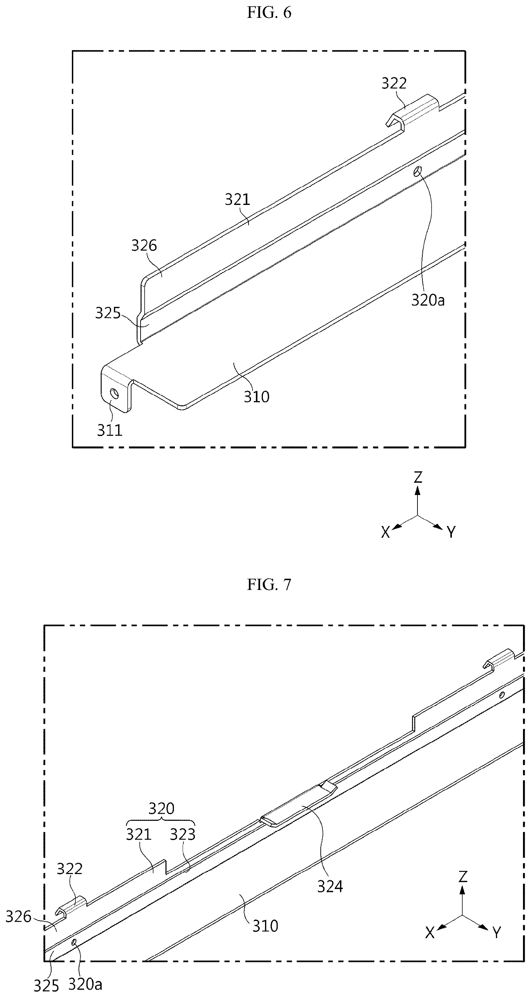

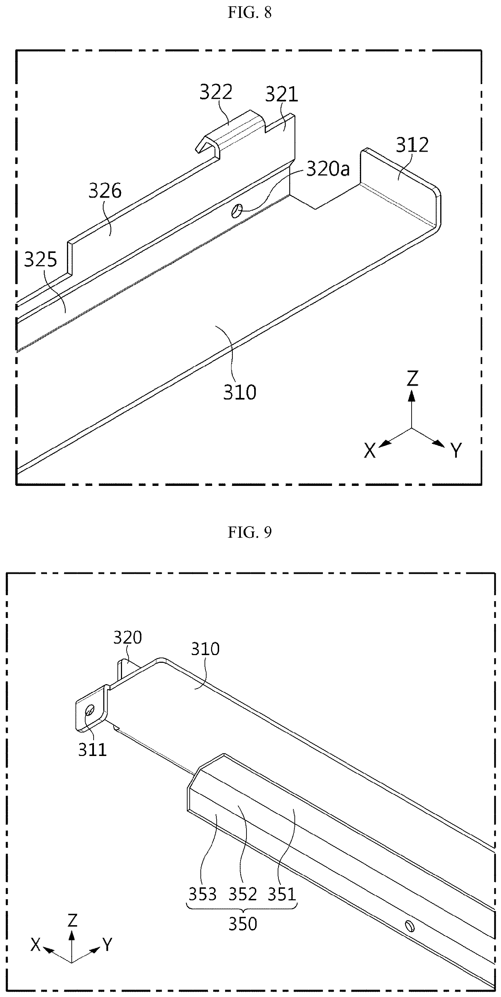

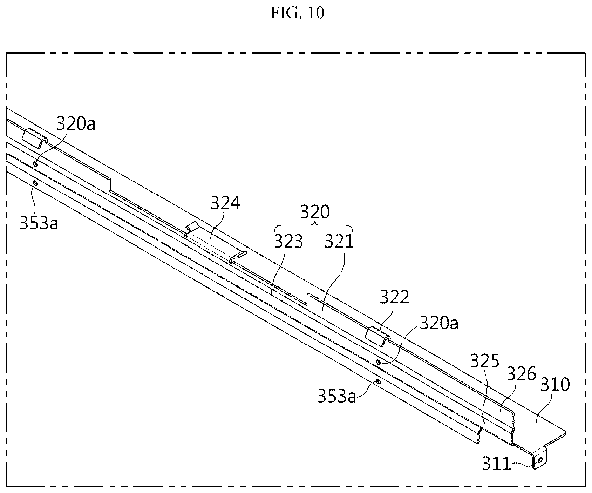

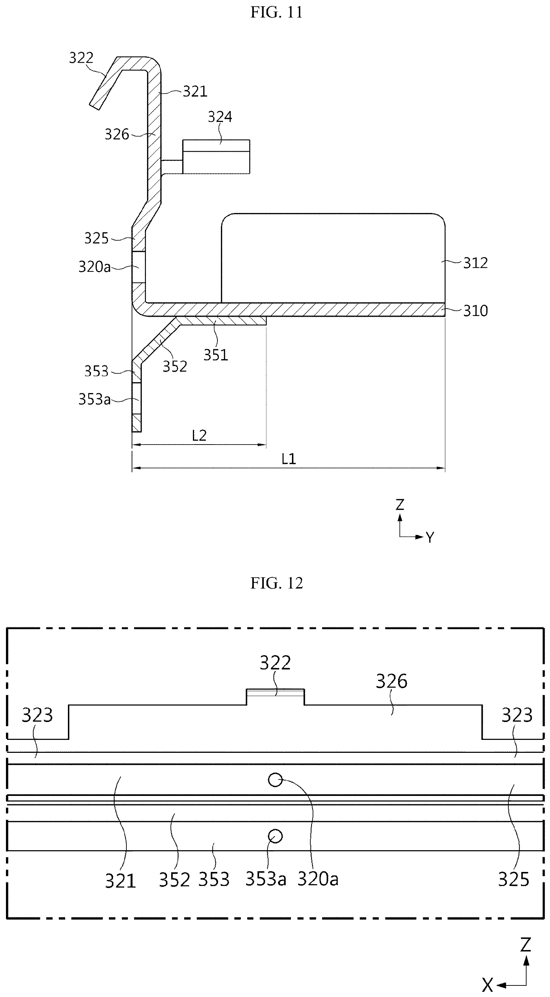

FIG. 4 is a diagram showing the bracket 300 of the container module according to an embodiment of the present disclosure. FIG. 5 is an exploded view showing some components of the bracket 300 of FIG. 4. FIG. 6 is an enlarged view showing a front part of the bracket 300 of FIG. 4. FIG. 7 is an enlarged view showing an intermediate part of the bracket 300 of FIG. 4. FIG. 8 is an enlarged view showing a rear part of FIG. 4. FIG. 9 is a diagram showing the bracket 300 of FIG. 4 when viewed from bottom. FIG. 10 is a diagram showing the bracket 300 of FIG. 4 when viewed from a different direction. FIG. 11 is a cross-sectional view of FIG. 4, taken along the line A-A'. FIG. 12 is an enlarged view of section B in FIG. 4.

Referring to FIGs. 4 to 12, the bracket 300 of the container module according to an embodiment of the present disclosure may include the horizontal portion 310, the vertical portion 320 and a support 350.

The horizontal portion 310 may be extended in the front-rear direction or Y axis direction. The horizontal portion 310 may have a stopper 312 at the rear end. The stopper 312 may be formed by bending up a part of the horizontal portion 310. The horizontal portion 310 and the stopper 312 may be integrally formed. The horizontal portion 310 may include a first fixing portion 311 at the front side. The first fixing portion 311 may be formed by bending down a part of the horizontal portion 310. The first fixing portion 311 and the stopper 312 may be integrally formed. The first fixing portion 311 may include a through-hole formed in the front-rear direction.

The vertical portion 320 may be extended in the front-rear direction or Y axis direction. The vertical portion 320 may be extended up from the horizontal portion 310. The vertical portion 320 may be formed by bending up a part of the horizontal portion 310. The vertical portion 320 and the horizontal portion 310 may be formed at an angle of approximately 90°. The vertical portion 320 and the horizontal portion 310 may be integrally formed. Additionally, the vertical portion 320 may be extended up with a step.

The vertical portion 320 may include a first part 325 and a second part 326. The first part 325 may be extended from the horizontal portion 310. The second part 326 may be extended from the first part 325. Each of the first part 325 and the second part 326 may be extended along the front-rear direction or Y axis direction. The first part 325 and the second part 326 may be stepped. The second part 326 may be stepped in the inward direction from the first part 325 or in a direction in which the horizontal portion 310 is formed. The second part 326 may be formed by bending up a part of the first part 325. The first part 325 and the second part 326 may be integrally formed.

The second part 326 may include protruding and receding portions. The second part 326 may include a concave portion 323 and a convex portion 321. The second part 326 may include a plurality of concave portions 323 and a plurality of convex portions 321. The concave portion 323 and the convex portion 321 may be arranged in an alternating manner along the front-rear direction or Y axis direction. The convex portion 321 may include a hook 322. The hook 322 may be formed in the outward direction of the second part 326. The hook 322 may be disposed in each convex portion 321. The first part 325 may include a plurality of first fastening holes 320a. The first fastening hole 320a may be located below the hook 322. The first fastening hole 320a may be disposed in a one-to-one relationship with the hook 322. The concave portion 323 may include a second fixing portion 324. The second fixing portion 324 may be formed in the inward direction of the second part 326. The second fixing portion 324 may be disposed in each concave portion 323. The second fixing portion 324 may be formed by bending a part of the concave portion 323 in the inward direction. The second fixing portion 324 and the concave portion 323 may be formed at an angle of approximately 90°. The second fixing portion 324 and the concave portion 323 may be integrally formed.

The support 350 may include a horizontal support portion 351. The horizontal support portion 351 may be extended along the front-rear direction or Y axis direction. The horizontal support portion 351 may be coupled, fixed or attached to the lower surface of the horizontal portion 310. For example, the horizontal support portion 351 may be coupled to the lower surface of the horizontal portion 310 by welding. A length of the horizontal support portion 351 in the front-rear direction may be shorter than a length of the horizontal portion 310 in the front-rear direction. Additionally, a width L2 of the horizontal support portion 351 in the left-right direction or a length L2 of the horizontal support portion 351 in Y axis direction may be shorter than a width L1 of the horizontal portion 310 in the left-right direction or a length L1 of the horizontal portion 310 in Y axis direction. For example, the width L2 of the horizontal support portion 351 in the left-right direction may be equal to or less than half of the width L1 of the horizontal portion 310 in the left-right direction.

The support 350 may include a vertical support portion 353. The vertical support portion 353 may be extended along the front-rear direction or Y axis direction. The vertical support portion 353 and the horizontal support portion 351 may be formed at an angle of approximately 90°. The horizontal support portion 351 and the vertical support portion 353 may be integrally formed. The vertical support portion 353 may include a plurality of second fastening holes 353a. The second fastening hole 353a may be located below the hook 322. The second fastening hole 353a may be disposed in a one-to-one relationship with the hook 322. The vertical support portion 353 may be formed by bending down a part of the horizontal support portion 351. The horizontal support portion 351 and the vertical support portion 353 may be integrally formed.

A connection portion 352 may connect the horizontal support portion 351 to the vertical support portion 353. The connection portion 352 may be extended along the front-rear direction or Y axis direction. The connection portion 352 may be inclined. The connection portion 352 may be also referred to as a truss part 352. The connection portion 352 may be formed by obliquely bending down a part of the horizontal support portion 351. Alternatively, the connection portion 352 may be formed by obliquely bending a part of the vertical support portion 353 in the inward direction. The horizontal support portion 351, the connection portion 352 and the vertical support portion 353 may be integrally formed.

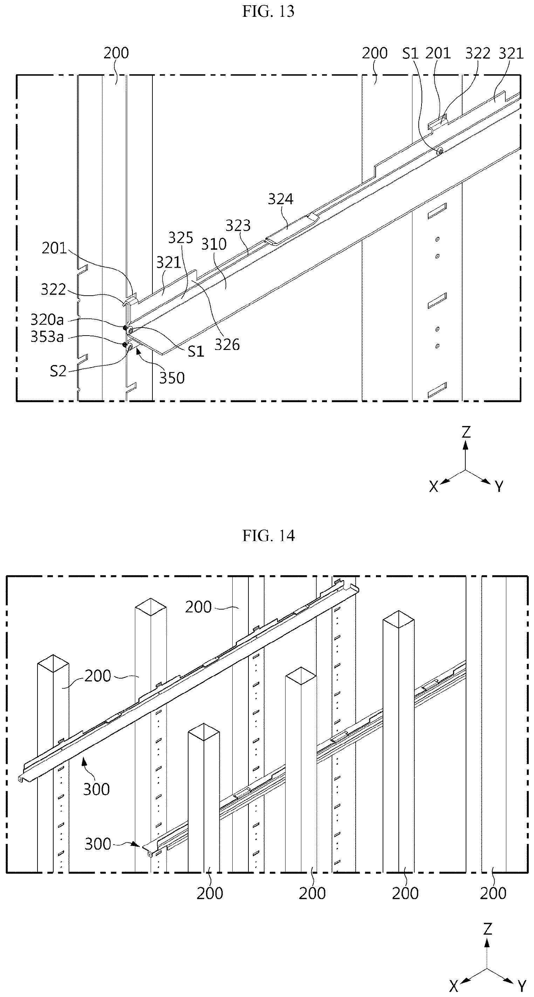

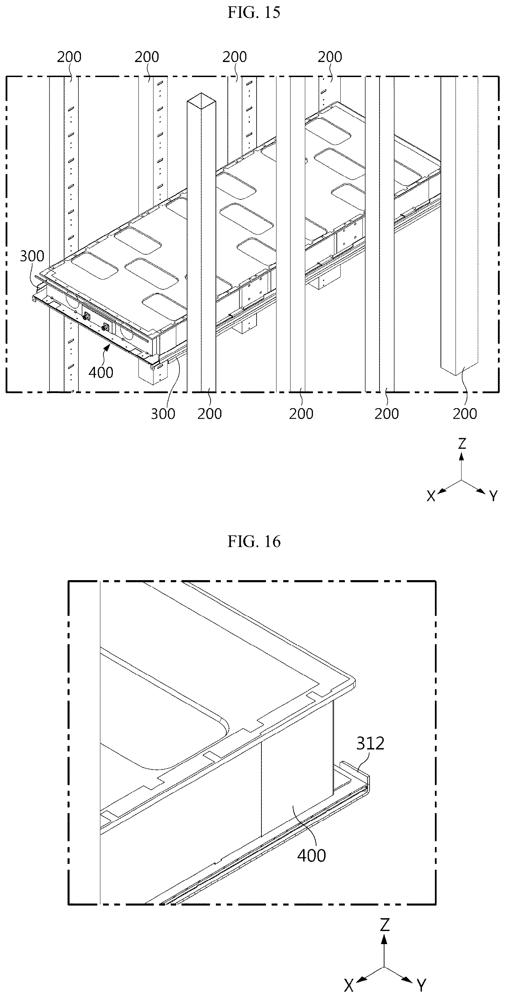

FIG. 13 is a diagram showing the bracket 300 of FIG. 4 installed at the column 200. FIG. 14 is a diagram showing a pair of brackets 300 of FIG. 4. FIG. 15 is a diagram showing the battery pack 400 installed at the bracket 300 of FIG. 14. FIG. 16 is a diagram showing a rear part of FIG. 15.

Referring to FIGs. 13 to 16, the column 200 may have a stopper hole 201. The hook 322 of the bracket 300 may be inserted into the stopper hole 201. Additionally, a first fastening member S1 may fasten, couple or fix the first part 325 to the column 200 through the first fastening hole 320a of the first part 325. Additionally, a second fastening member S2 may fasten, couple or fix the vertical support portion 353 to the column 200 through the second fastening hole 353a of the vertical support portion 353.

Because the second part 326 is stepped inward from the first part 325, so that the hook 322 of the bracket 300 may be inserted into the column 200, and the first part 325 may come into close contact with the column 200. When the hook 322 is inserted into the column 200, the position of the bracket 300 may be roughly aligned, and the bracket 300 may be fixed using the fastening members S1, S2. Bye the step of the second part 326 and the hook 322, assembly efficiency of the bracket 300 may improve. The vertical portion 320 and the horizontal support portion 351 may be substantially on the same plane.

The brackets 300 in pair may be coupled to the columns 200. The pair of brackets 300 may be arranged along the left-right direction or Y axis direction. The pair of brackets 300 may be substantially at the same height. The pair of brackets 300 may be fastened, coupled to one battery pack 400. Alternatively, the pair of brackets 300 may mount one battery pack 400. The horizontal portion 310 of the left bracket 300 among the pair of brackets 300 may be extended to the right or in +Y axis direction. Additionally, the horizontal portion 310 of the right bracket 300 among the pair of brackets 300 may be extended to the left or in -Y axis direction. The battery pack 400 may be placed on the horizontal portion 310 of the pair of brackets 300 and moved rearward, then eventually installed. Additionally, the stopper 312 may limit the movement of the battery pack 400. When the rear end of the battery pack 400 contacts the stopper 312, the position of the battery pack 400 may be aligned.

The battery pack 400 may have great weight. Accordingly, high load may be applied to the bracket 300. Due to including the support 350, the bracket 300 may maintain stiffness and stably support the battery pack 400 from the high load.

FIG. 17 is a diagram showing a variation of the bracket 300 of FIG. 4. Referring to FIG. 17, the bracket 300 of the container module according to another embodiment of the present disclosure may include a slide hole 360. The slide hole 360 may include a hole in the horizontal portion 310 and a hole in the vertical portion 320. The hole in the horizontal portion 310 may expose the horizontal support portion 351. Alternatively, the hole in the horizontal portion 310 may pass through the horizontal support portion 351. The hole in the vertical portion 320 may be formed in the first part 325. The slide hole 360 may include a plurality of slide holes. The plurality of slide holes 360 may be arranged along the front-rear direction or X axis direction or the length direction of the bracket 300. The slide hole 360 may reduce the contact area between the bracket 300 and the battery pack 400. Accordingly, the frictional force between the bracket 300 and the battery pack 400 may be reduced. Accordingly, when the battery pack 400 is placed on the bracket 300, the battery pack 400 may move with ease.

FIG. 18 is a cross-sectional view of FIG. 3, taken along the line C-C'. Referring to FIG. 18, the support 350 may be located below the bracket 300. Additionally, the support 350 may support the lower surface of the horizontal portion 310. Additionally, the support 350 may contact the lower surface of the horizontal portion 310.

The connection portion 352 may obliquely connect the horizontal support portion 351 to the vertical support portion 353. An angle D between the connection portion 352 and Y axis or the ground may be preferably from 60° to 90°. As the angle D is higher, the support 350 may support the bracket 300 more strongly.

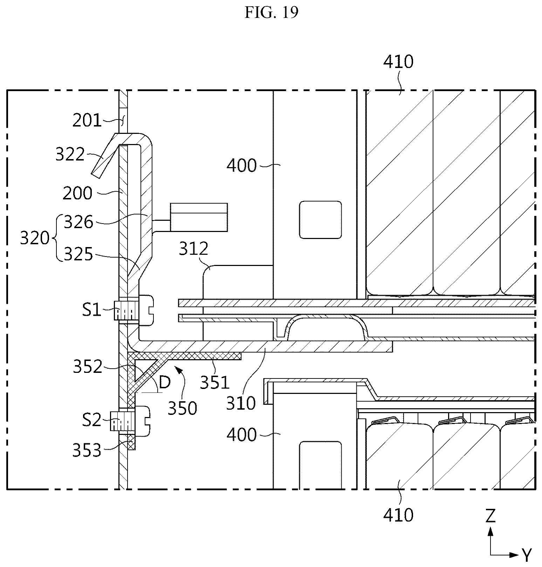

FIG. 19 is a diagram showing a variation of FIG. 18. Referring to FIG. 19, the vertical support portion 353 may be extended in the top-bottom direction or Z axis direction. Additionally, the horizontal support portion 351 may be extended in the left-right direction or -Y axis direction. Alternatively, the horizontal support portion 351 may be extended toward the column 200.

The horizontal support portion 351 and the vertical support portion 353 may be connected to form the corner. Alternatively, the horizontal support portion 351 and the vertical support portion 353 may be perpendicular to each other.

Additionally, the connection portion 352 may obliquely connect the horizontal support portion 351 to the vertical support portion 353.

By this configuration of the present disclosure, the support 350 may support the bracket 300 more strongly.

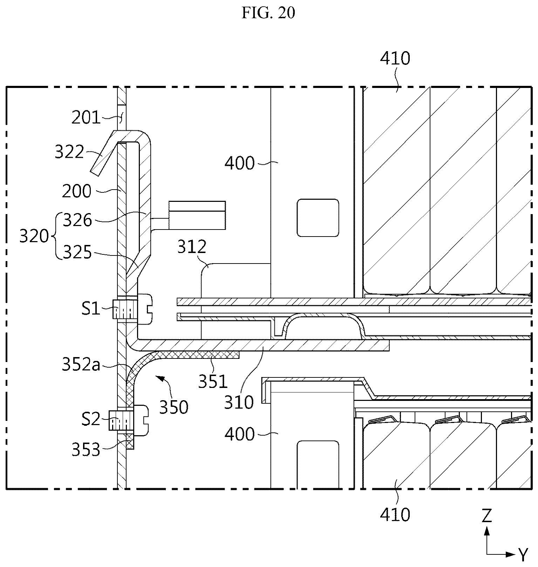

FIG. 20 is a diagram showing a variation of FIG. 18. Referring to FIG. 20, the connection portion 352a may connect the horizontal support portion 351 to the vertical support portion 353 in a curved way. For example, a cross section of the connection portion 352a may be a part of a circle. In this instance, the connection portion 352a may have a constant curvature. Additionally, the connection portion 352a may be protruded toward the corner formed by the horizontal portion 310 and the vertical portion 320. The horizontal support portion 351, the connection portion 352a and the vertical support portion 353 may be integrally formed. The connection portion 352a may connect the horizontal support portion 351 to the vertical support portion 353. The connection portion 352a may be extended along the front-rear direction or Y axis direction.

By this configuration of the present disclosure, the support 350 may support the bracket 300 more strongly.

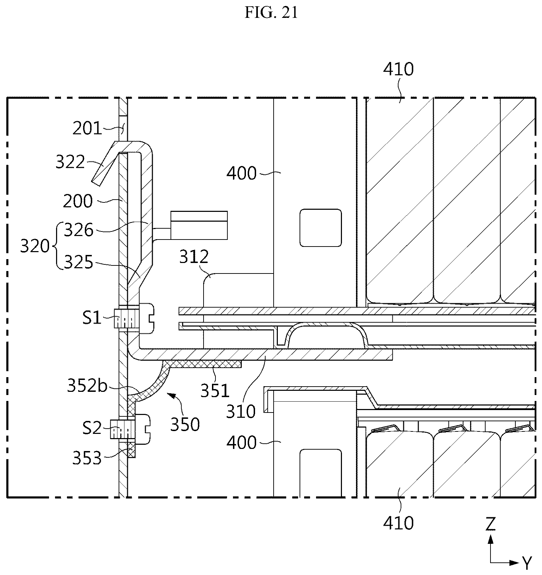

FIG. 21 is a diagram showing a variation of FIG. 18. Referring to FIG. 21, the connection portion 352b may connect the horizontal support portion 351 to the vertical support portion 353 in a curved way. For example, a cross section of the connection portion 352b may be a part of a circle. In this instance, the connection portion 352b may have a constant curvature. Additionally, the connection portion 352b may be protruded in a direction facing away from the corner formed by the horizontal portion 310 and the vertical portion 320. The horizontal support portion 351, the connection portion 352b and the vertical support portion 353 may be integrally formed. The connection portion 352b may connect the horizontal support portion 351 to the vertical support portion 353. The connection portion 352b may be extended along the front-rear direction or Y axis direction.

By this configuration of the present disclosure, the support 350 may support the bracket 300 more strongly.

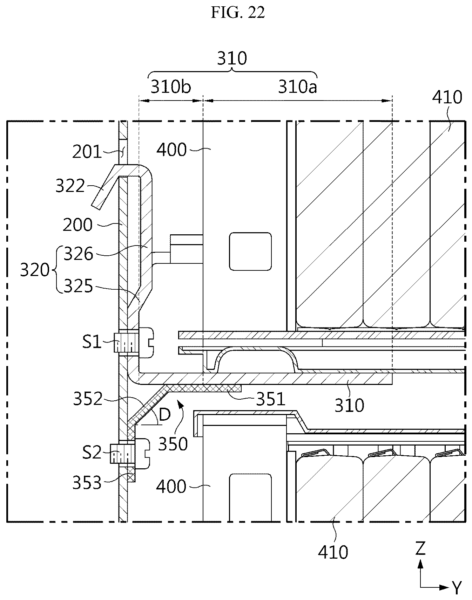

FIG. 22 is a diagram showing a variation of FIG. 18. Referring to FIG. 22, the horizontal portion 310 may include a first part 310b and a second part 310a. The first part 310b may be extended from the vertical portion 320. Alternatively, the first part 310b may be connected to the vertical portion 320. The second part 310a may be extended from the first part 310b. Additionally, the second part 310a may contact the battery pack 400. The second part 310a may be where the load of the battery pack 400 is directly applied. The second part 310a may be located on the right side of the first part 310b.

At least part of the horizontal support portion 351 may support the second part 310a. Alternatively, at least part of the horizontal support portion 351 may contact the second part 310a. Alternatively, at least part of the horizontal support portion 351 may be coupled, fastened, fixed or attached to the second part 310a.

By this configuration of the present disclosure, the support 350 may directly support the second part 310a to which the load of the battery pack 400 is applied, thereby effectively preventing sags or warpage in the bracket 300.

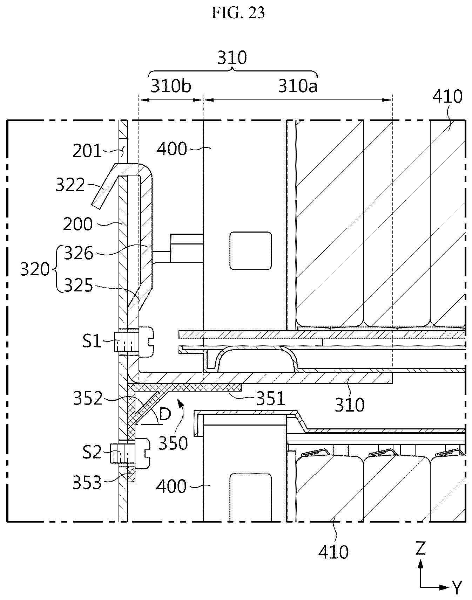

FIG. 23 is a diagram showing a variation of FIG. 18. Referring to FIG. 23, the horizontal support portion 351 and the vertical support portion 353 may be connected to form the corner. Additionally, at least part of the horizontal support portion 351 may be contacted, coupled, fastened, fixed or attached to the second part 310a.

By this configuration of the present disclosure, the support may support the bracket more strongly.

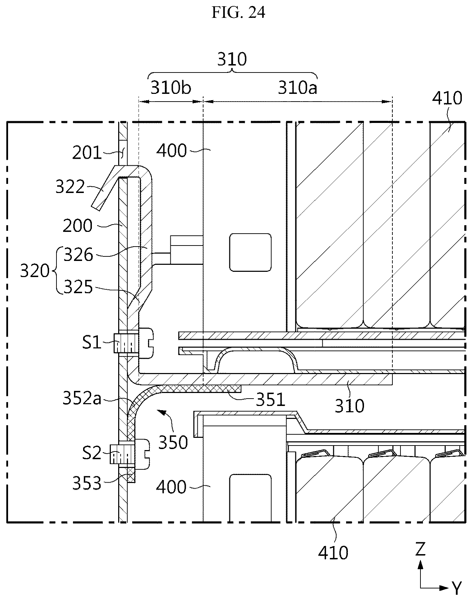

FIG. 24 is a diagram showing a variation of FIG. 18. Referring to FIG. 24, the connection portion 352a may connect the horizontal support portion 351 to the vertical support portion 353 in a curved way. For example, a cross section of the connection portion 352a may be a part of a circle. In this instance, the connection portion 352a may have a constant curvature. Additionally, the connection portion 352a may be protruded toward the corner formed by the horizontal portion 310 and the vertical portion 320. The horizontal support portion 351, the connection portion 352a and the vertical support portion 353 may be integrally formed. The connection portion 352a may connect the horizontal support portion 351 to the vertical support portion 353. The connection portion 352a may be extended along the front-rear direction or Y axis direction.

By this configuration of the present disclosure, the support 350 may directly support the second part 310a to which the load of the battery pack 400 is applied, thereby effectively preventing sags or warpage in the bracket 300.

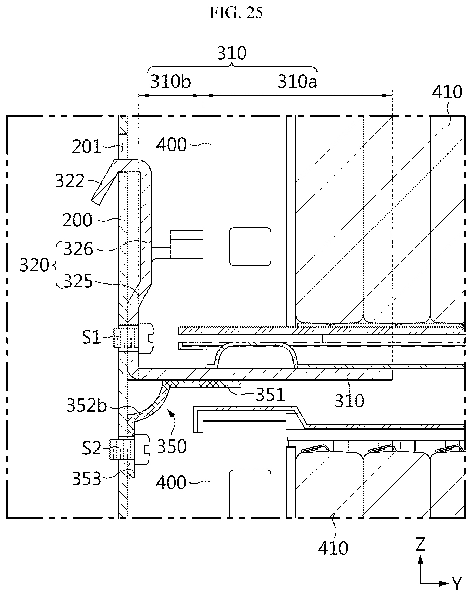

FIG. 25 is a diagram showing a variation of FIG. 18. Referring to FIG. 25, the connection portion 352b may connect the horizontal support portion 351 to the vertical support portion 353 in a curved way. For example, a cross section of the connection portion 352b may be a part of a circle. In this instance, the connection portion 352b may have a constant curvature. Additionally, the connection portion 352b may protrude in a direction facing away from the corner formed by the horizontal portion 310 and the vertical portion 320. The horizontal support portion 351, the connection portion 352b and the vertical support portion 353 may be integrally formed. The connection portion 352b may connect the horizontal support portion 351 to the vertical support portion 353. The connection portion 352b may be extended along the front-rear direction or Y axis direction.

By this configuration of the present disclosure, the support 350 may directly support the second part 310a to which the load of the battery pack 400 is applied, thereby effectively preventing sags or warpage in the bracket 300.

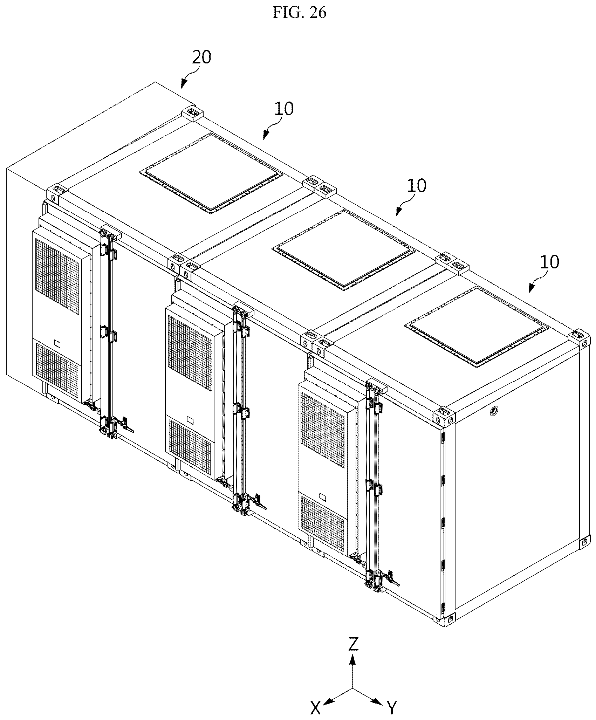

FIG. 26 is a diagram showing a container system of the present disclosure. Referring to FIGs. 1 and 26, the container system may include a plurality of container modules 10. The plurality of container modules 10 may be physically or electrically connected to each other. The container module 10 may have a connection hole 121 in the side panel 120. A cable electrically connecting the plurality of container modules 10 may pass through the connection hole 121.

The case 100 may be configured to be stacked or coupled with the case 100 of another container module 10. The case 100 may have a coupling portion 101 in the side panel 120. The coupling portion 101 may be disposed in each of the left side panel 120 and the right side panel 120 of the case 100. Additionally, the coupling portion 101 may be disposed in each of the upper part and the lower part of the side panel 120. Additionally, the coupling portion 101 may be disposed at each corner of the side panel 120. The case 100 may be connected, coupled, fastened, stacked or fixed to the case 100 of another container module along the left-right direction or Y axis direction.

The container system may include a control module 20. The control module 20 may be fastened, coupled, connected, stacked or fixed to the side panel 120 of the container module 10 or the coupling portion 101.

The control module 20 may be electrically connected to the plurality of container modules 10 included in the container system. The control module 20 may control the charge and discharge of the plurality of container modules 10. Additionally, the control module 20 may acquire state information of the plurality of container modules 10.

The container system may further include a fire fighting module to control thermal events.

An energy storage system (ESS) according to the present disclosure may include the container module 10 according to the present disclosure. The energy storage system may include a plurality of container systems. Additionally, the container system may include a plurality of container modules 10. The energy storage system may include a predetermined number of container modules 10 combined with the control module 20 to form a link group.

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A container module comprising:
a case configured to provide an internal space;
a column located inside the case and extended in a top-bottom direction;
a bracket including a vertical portion coupled to the column and a horizontal portion extended from the vertical portion;
a battery pack located on the horizontal portion; and
a support located below the bracket, and configured to support a lower surface of the horizontal portion.

2. The container module according to claim 1, wherein the horizontal portion includes:
a first part extended from the vertical portion; and
a second part extended from the first part, and coming into contact with the battery pack, and
wherein the support supports the second part.

3. The container module according to claim 1, wherein the support includes:
a horizontal support portion configured to support the lower surface of the horizontal portion; and
a vertical support portion coupled to the column.

4. The container module according to claim 3, wherein the support further includes a truss part obliquely connecting the horizontal support portion to the vertical support portion.

5. The container module according to claim 3, wherein the support further includes a connection portion connecting the horizontal support portion to the vertical support portion in a curved way.

6. The container module according to claim 3, wherein the vertical support portion is extended in the top-bottom direction,
wherein the horizontal support portion is extended toward the column, and
wherein the vertical support portion and the horizontal support portion are connected to form a corner.

7. The container module according to claim 3, wherein the horizontal support portion and the horizontal portion are coupled by welding.

8. The container module according to claim 3, further comprising:
a fastening member configured to fasten the vertical support portion to the column.

9. The container module according to claim 1, wherein the column has a stopper hole, and
wherein the vertical portion includes a hook which is inserted into the stopper hole.

10. The container module according to claim 1, wherein at least one of the bracket, the support or the battery pack is extended in a front-rear direction.

11. The container module according to claim 1, wherein the bracket is extended in a front-rear direction,
wherein the bracket further includes a stopper at a rear end, and
wherein the battery pack contacts the stopper.

12. The container module according to claim 1, wherein the bracket has a slide hole in the horizontal portion.

13. The container module according to claim 12, wherein the slide holes includes a plurality of slide holes, and
wherein the plurality of slide holes is arranged along a length direction of the bracket.

14. A container system comprising the container module according to any one of claims 1 to 13.

15. An energy storage system comprising the container module according to any one of claims 1 to 13.
